Europäisches Patentamt

European Patent Office

Office européen des brevets

(19)

(11) EP 1 533 966 A2

(12) **EUROPEAN PATENT APPLICATION**

(43) Date of publication:
25.05.2005 Bulletin 2005/21

(51) Int Cl.7: **H04L 27/26**

(21) Application number: **04027639.6**

(22) Date of filing: **22.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **20.11.2003 KR 2003082600**

(71) Applicant: **Samsung Electronics Co., Ltd.**
**Suwon-si, Gyeonggi-do (KR)**

(72) Inventors:
• **Yu, Hyun-Seok**
**Yeongtong-gu Suwon-si Gyeonggi-do (KR)**

• **Oh, Hyun-Seok**
**Yeongtong-gu Suwon-si Gyeonggi-do (KR)**
• **Lee, Hye-Jeong**
**Yeongtong-gu Suwon-si Gyeonggi-do (KR)**
• **Choi, Gin-Kyu**
**Yeongtong-gu Suwon-si Gyeonggi-do (KR)**
• **Lim, Young-Seok**
**Yeongtong-gu Suwon-si Gyeonggi-do (KR)**
• **Moon, Yong-Suk**
**Yeongtong-gu Suwon-si Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Apparatus and method for transmitting/receiving channel quality information of subcarriers in an orthogonal frequency division multiplexing system**

(57)    A method of transmitting/receiving channel quality information (CQI) of subcarriers in an OFDM system where data is transmitted on the subcarriers via one or more transmit antennas. The subcarriers are grouped into subcarrier groups each having at least one subcarrier and further grouped into subgroups each having one or more subgroups. A user equipment generates CQIs for one or more allocated subcarrier groups and the transmit antennas or CQIs for the allocated subcarrier groups, the subgroups of the subcarrier groups, and the transmit antennas. The group CQIs and the subgroup CQIs are transmitted to a Node B in one or more physical channel frames.

FIG.3

EP 1 533 966 A2

**Description**

**BACKGROUND OF THE INVENTION**

Field of the Invention:

The present invention relates generally to an orthogonal frequency division multiplexing (OFDM) mobile communication system. More particularly, the present invention relates to a method and apparatus for transmitting and receiving the channel quality information of subcarriers used for data transmission/reception between a Node B (or base station) and a user equipment (UE).

Description of the Related Art:

OFDM is defined as a two-dimensional access scheme that combines time division access (TDA) and frequency division access (FDA). Therefore, each OFDM symbol is transmitted on a predetermined sub-channel composed of distributed subcarriers.

The orthogonal nature of OFDM allows the spectrums of sub-channels to overlap, having a positive effect on spectral efficiency. Since OFDM modulation/demodulation is implemented by inverse fast fourier transform (IFFT) and fast fourier transform (FFT) , a modulator/demodulator can be realized digitally with efficiency. Also, the robustness of OFDM against frequency selective fading and narrow band interference renders OFDM effective for existing European digital broadcasting and high-speed data transmission schemes, standardized as IEEE 802.11 a, IEEE 802.16a, and IEEE 802.16b, which are generally used in large-volume radio communication systems. OFDM is a special case of multi carrier modulation (MCM) in which a serial symbol sequence is converted to parallel symbol sequences and modulated to mutually orthogonal subcarriers (sub-channels) prior to transmission.

The first MCM systems appeared in the late 1950's for military high frequency radio communication, and OFDM, with overlapping orthogonal subcarriers, was initially developed in the 1970's. In view of orthogonal modulation between multiple carriers, OFDM has limitations in actual implementation for systems. In 1971, Weinstein et. al. proposed an OFDM scheme that applies discrete fourier transform (DFT) to parallel data transmission as an efficient modulation/demodulation process, which was a driving force for the development of OFDM. The introduction of a guard interval and a cyclic prefix as the guard interval further mitigates adverse effects of multi-path propagation and delay spread on systems. That is why OFDM has widely been exploited for digital data communications such as digital audio broadcasting (DAB), digital TV broadcasting, wireless local area network (WLAN), and wireless asynchronous transfer mode (W-ATM). Although hardware complexity was originally an obstacle to widespread use of OFDM, recent advances in digital signal processing technology, including FFT and IFFT, enable OFDM to be implemented today much more easily than before.

OFDM, which is similar to frequency division multiplexing (FDM), boasts of optimum transmission efficiency in high-speed data transmission because it transmits data on subcarriers, maintaining orthogonality among them. The optimum transmission efficiency is further attributed to good frequency use efficiency and robustness against multi-path fading in OFDM. Overlapping frequency spectrums leads to an efficient use of frequency and robustness against frequency selective fading and multi-path fading. OFDM reduces effects of the ISI by use of guard intervals and enables design of a simple equalizer hardware structure. Furthermore, since OFDM is robust against impulse noise, it is increasingly popular in communication systems.

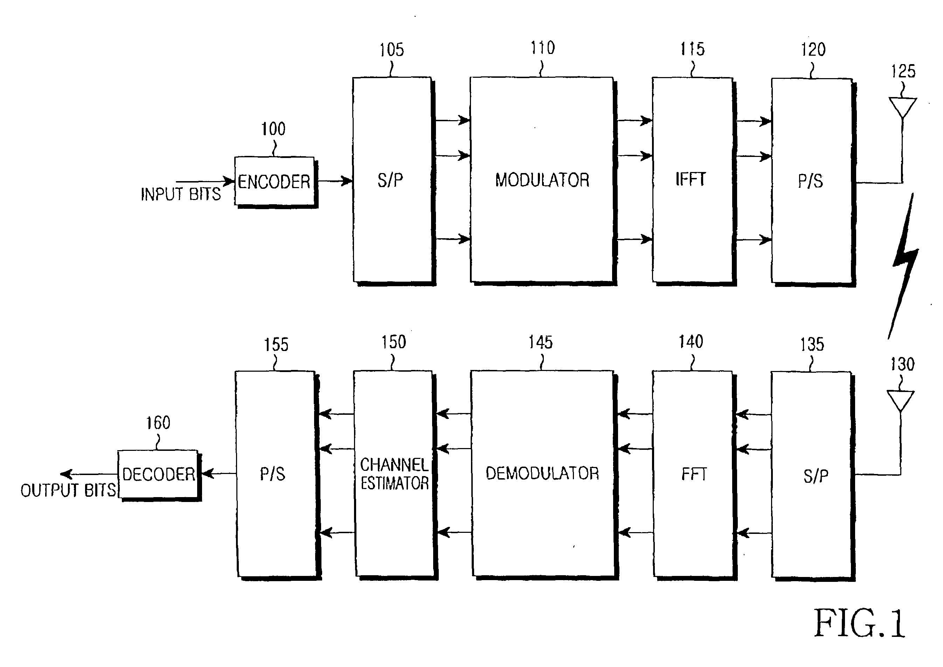

FIG. 1 is a block diagram of a conventional OFDM mobile communication system. Its structure will be described in detail with reference to FIG. 1. With the input of a binary signal, a channel encoder 100 outputs code symbols. A serial-to-parallel (S/P) converter 105 converts the serial code symbol sequence received from the channel encoder 100 to parallel symbol sequences. A modulator 110 maps the code symbol to a signal constellation by quadrature phase shift keying (QPSK), 8-ary phase shift keying (8PSK), 16-ary quadrature amplitude modulation (16QAM), or 64QAM. An IFFT 115 inverse-fast-fourier-transforms modulation symbols received from the modulator 110. A parallel-to-serial (P/S) converter 120 converts parallel symbols received from the IFFT 115 to a serial symbol sequence. The serial symbols are transmitted through a transmit antenna 125.

A receive antenna 130 receives the transmitted series symbols from the transmit antenna 125. An S/P converter 135 converts the received serial symbol sequence to parallel symbols. An FFT 140 fast-fourier-transforms the parallel symbols. A demodulator 145, having the same signal constellation as used in the modulator 110, demodulates the FFT symbols to binary symbols by the signal constellation. A channel estimator 150 channel-estimates the demodulated binary symbols. The channel estimation estimates situations involved in transmission of data from the transmit antenna, thereby enabling efficient data transmission. A P/S converter 155 converts the channel-estimated binary symbols to a serial symbol sequence from a parallel symbol sequence. A decoder 160 decodes the serial binary symbols and outputs decoded binary bits.

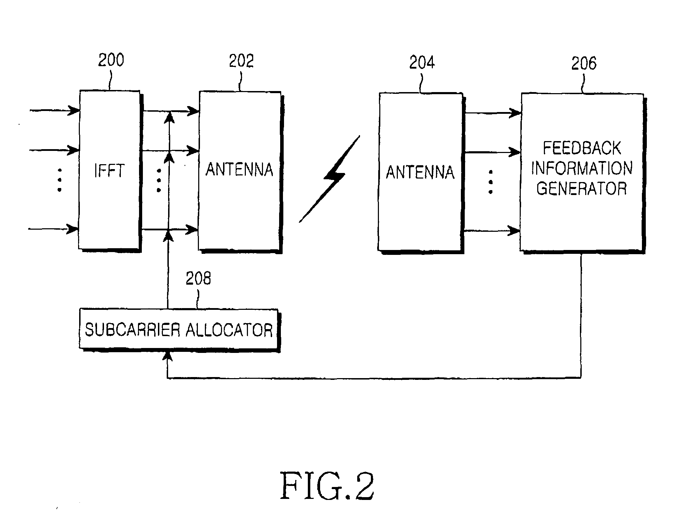

FIG 2 illustrates an operation in a Node B for allocating subcarriers to a UE in an OFDM mobile communication system. With reference to FIG 2, subcarrier allocation to the UE will be described below. Specific components such as an IFFT, a P/S converter, an S/P converter, and an FFT are not illustrated here.

An IFFT 200 transmits transmission data through an antenna 202. As stated earlier, the transmission data is transmitted on a plurality of subcarriers. The Node B uses all of the subcarriers or some of them, for the data transmission. A feedback information generator 206 estimates the channel status of data received through a receive antenna 204. The feedback information generator 206 measures the SIR (Signal-to-Interference power Ratio) or CNR (Channel-to-Noise Ratio) of the received signal. The feedback information generator 206 measures the channel status of an input signal transmitted on a particular channel (or on a particular subcarrier, from a particular transmit antenna, or to a particular combination of receive antennas) and transmits the measurement to a subcarrier allocator 208. Table 1 below illustrates an example of feedback information that the feedback information generator 206 generates considering only the channel characteristics of subcarriers and transmits to the subcarrier allocator 208.

Table 1

| Subcarrier | Feedback information |
|---|---|
| Subcarrier #0 | a |
| Subcarrier #1 | b |
| Subcarrier #2 | d |
| Subcarrier #3 | c |
| Subcarrier #4 | e |
| Subcarrier #5 | g |
| Subcarrier #6 | d |
| Subcarrier #7 | e |
| ... | ... |
| Subcarrier #N-1 | f |

In the case illustrated in Table 1, data is transmitted on N subcarriers. Feedback information a to g is SIRs or CNRs generated from the feedback information generator 206. The feedback information is generally represented in several bits. The subcarrier allocator 208 determines a subcarrier on which data is delivered based on the feedback information. The subcarrier allocator 208 selects a subcarrier having the highest SIR or CNR. If two or more subcarriers are used between the Node B and the UE, as many subcarriers having the highest SIRs or CNRs as required are selected sequentially.

If the SIR or CNR is higher in the order of a>b>c>d>e>f>g, the subcarrier allocator 208 allocates subcarriers in the order of subcarrier #0, subcarrier #1, subcarrier #3, subcarrier #2, .... If one subcarrier is needed, subcarrier #0 is selected. If two subcarriers are used, subcarrier #0 and subcarrier #1 are allocated. If three subcarriers are used, subcarrier #0, subcarrier #1, and subcarrier #3 are allocated. If four subcarriers are used, subcarrier #0, subcarrier #1, subcarrier #3 and subcarrier #2 are allocated.

In the subcarrier allocation, only one UE is considered. If a plurality of UEs transmit the feedback information of subcarriers to the subcarrier allocator 208, the subcarrier allocator 208 allocates subcarriers to the UEs, comprehensively taking the feedback information into account.

The above-described subcarrier allocation is carried out in two steps: the feedback information is arranged according to channel statuses and then as many subcarriers as needed are allocated to a UE based on the arranged feedback information. The feedback information generator 203 measures the channel status on a per-subcarrier basis and transmits the channel status measurement to the subcarrier allocator 208.

Existing mobile communication systems, however, face many limitations in transmitting data on the uplink. Therefore, transmission of the feedback information of all subcarriers on the uplink is slower than the downlink, and causes serious waste of radio resources. Moreover, when the channel environment varies with time as in a mobile communication system, the subcarrier allocation must be periodic and shorter than the coherence time. Transmission of the feedback information of all individual subcarriers takes a long time, however, which makes it impossible to allocate sub-carries to the UE within the coherence time.

## SUMMARY OF THE INVENTION

An object of the present invention is to substantially solve at least the above problems and/or disadvantages and to provide at least the advantages below. Accordingly, an object of the present invention is to provide an apparatus and method for reducing uplink feedback information about the channel qualities of subcarriers.

Another object of the present invention is to provide an apparatus and method for allocating subcarriers to UEs according to a varying channel status.

The above objects are achieved by providing a method of transmitting/receiving CQIs of a plurality of subcarriers in an OFDM system where data is transmitted on the plurality of subcarriers via one or more transmit antennas.

According to one aspect of the present invention, in a method of transmitting channel quality indicators (CQIs) of a plurality of subcarriers in an OFDM system where data is transmitted on the plurality of subcarriers via one or more transmit antennas, a UE groups the subcarriers into subcarrier groups each having at least one subcarrier, generates CQIs for one or more allocated subcarrier groups and the transmit antennas, and transmits the CQIs to a Node B in one or more physical channel frames.

According to another aspect of the present invention, in a method of transmitting CQIs of a plurality of subcarriers in an OFDM system where data is transmitted on the plurality of subcarriers via one or more transmit antennas, a UE groups the subcarriers into subcarrier groups each having at least one subcarrier, and divides each of the subcarrier groups into subgroups each having one or more subcarriers. The UE generates group CQIs for one or more allocated subcarrier groups and the transmit antennas and transmits the group CQIs to a Node B in one or more physical channel frames. The UE generates subgroup CQIs for the allocated subcarrier groups, subgroups of the allocated subcarrier groups, and the transmit antennas, and transmits the subgroup CQIs to the Node B in one or more physical channel frames.

According to a further aspect of the present invention, in a method of receiving CQIs of a plurality of subcarriers in an OFDM system where data is transmitted on the plurality of subcarriers via one or more transmit antennas, a Node B groups the subcarriers into subcarrier groups each having at least one subcarrier, receives CQIs for one or more allocated subcarrier groups via the one or more transmit antennas in one or more physical channel frames, allocates the subcarrier groups to UEs based on the received CQIs, and transmits user data to the UEs on subcarriers of the allocated subcarrier groups.

According to still another aspect of the present invention, in a method of receiving CQIs of a plurality of subcarriers in an OFDM system where data is transmitted on the plurality of subcarriers via one or more transmit antennas, a Node B groups the subcarriers into subcarrier groups each having at least one subcarrier, and divides each of the subcarrier groups into subgroups each having one or more subcarriers. The Node B receives group CQIs for one or more allocated subcarrier groups via the one or more transmit antennas in one or more physical channel frames, and receives subgroup CQIs for the allocated subcarrier groups, and also receives subgroups of the allocated subcarrier groups via the one or more transmit antennas in one or more physical channel frames. The Node B allocates subcarriers to UEs based on the group CQIs or subgroup CQIs and transmits user data to the UEs to the allocated subcarriers.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a conventional OFDM mobile communication system;

FIG. 2 is a block diagram of a conventional configuration for allocating subcarriers to a UE by a subcarrier allocator in a Node B in a conventional method;

FIG. 3 is a block diagram of a configuration for allocating subcarriers to a UE by a subcarrier allocator in a Node B according to an embodiment of the present invention;

FIG. 4 is a detailed block diagram of a feedback information generator illustrated in FIG 3;

FIG. 5 is a flowchart illustrating a Node B operation according to an embodiment of the present invention;

FIG. 6 is a flowchart illustrating a UE operation according to an embodiment of the present invention;

FIG 7 is a block diagram illustrating a system configuration for allocating subcarriers to the UE in the Node B in a multiantenna system according to an embodiment of the present invention;

FIG 8 illustrates the format of feedback information directed from the UE to the Node B according to an embodiment of the present invention;

FIG. 9 illustrates the format of feedback information that the UE generates in a system using two transmit antennas according to an embodiment of the present invention;

FIG 10 illustrates the structure of subcarrier groups according to an embodiment of the present invention;

FIG. 11 illustrates the format of feedback information for a subgroup that the UE generates according to an embodiment of the present invention;

FIG. 12 illustrates the format of feedback information that the UE generates in a system using two transmit antennas according to an embodiment of the present invention;

FIG. 13 illustrates transmission of feedback information from a plurality of UEs according to an embodiment of the present invention;

FIG 14 illustrates transmission of feedback information from a UE that has been assigned a plurality of subcarrier groups according to an embodiment of the present invention;

FIG 15 is a flowchart illustrating an operation in the UE that operates in mode 1 and mode 2 according to an embodiment of the present invention; and

FIG. 16 is a flowchart illustrating an operation in the Node B that operates in mode 1 and mode 2 according to an embodiment of the present invention.

## DETAILED DESCRIPTION OF THE EXEMPLARY EMBODIMENTS

Exemplary embodiments of the present invention will be described herein below with reference to the accompanying drawings. In the following description, well-known functions or constructions are not described in detail for purposes of conciseness.

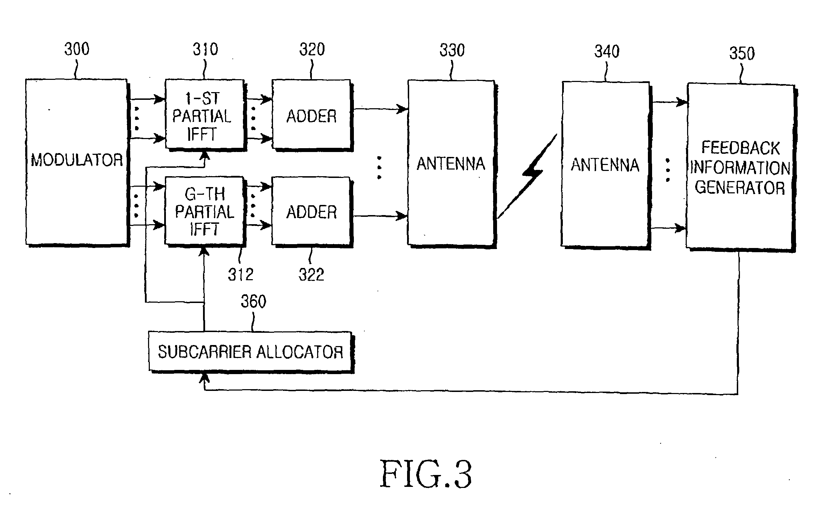

FIG 3 is a block diagram of a configuration for allocating subcarriers to a UE by a subcarrier allocator in a Node B according to an embodiment of the present invention. In FIG. 3, the Node B groups a plurality of subcarriers and allocates subcarriers to the UE by groups. The UE then transmits feedback information about the individual subcarrier groups. Hereinbelow, a description will be made of subcarrier allocation from the Node B to the UE according to an embodiment of the present invention.

It is assumed that N subcarriers are available and they are grouped into G subcarrier groups in an OFDM mobile communication system. Grouping the N subcarriers into G subcarrier groups will first be addressed. G varies with the channel status. For example, for high frequency selectivity, one subcarrier group includes less subcarriers. When the channel shows a flat-frequency response, more subcarriers are allocated to each subcarrier group. Besides the frequency selectivity, low rate of the slow uplink can be considered in determining the number of subcarriers in each group. Hence, G depends on the number of subcarriers in each group.

The subcarriers are grouped by ASA (Alternative Subcarrier Allocation) or SSA (Subband Subcarrier Allocation). The ASA and SSA will be described, taking an example where subcarriers #0 to #(N-1) are available and they are grouped into two subcarrier groups. The ASA allocates subcarriers #0, #2, ..., #(N-2) to the first subcarrier group, and subcarriers #1, #3, ..., #(N-1) to the second subcarrier group. The SSA allocates subcarriers #0, #1, ..., #(N/2-1) to the first subcarrier group, and subcarriers #N/2, #(N/2+1), ..., #(N-1) to the second subcarrier group. This method for allocating subcarriers, however, should not be construed as a limiting factor in regard to the embodiments of the present invention, as it is possible that subcarriers can be allocated to the subcarrier groups by user selection.

The Node B determines the subcarrier grouping method and the number of subcarrier groups according to whether the UE wants packet data communication or circuit data communication and according to a QoS (Quality of Service) level that the UE requests. Adjacent subcarriers bring similar results in view of the nature of coherent bandwidth. Hence, grouping adjacent subcarriers in one group does not lead to significant performance degradation. Hereinafter, it is presumed that adjacent subcarriers are allocated to the same group. Yet, it should be apparent to those skilled in the art of the present invention that subcarriers spaced by predetermined intervals are allocated to one group to achieve diversity gain, or subcarriers are cyclically allocated to one subcarrier group in a predetermined period, or any other way can be used to form subcarrier groups. The Node B notifies the UE of whatever changes in the grouping by physical layer signaling or upper layer signaling. For example, the physical layer signaling is done on an HS-SCCH (High Speed Shared Control CHannel) used for HSDPA (High Speed Downlink Packet Access). The signaling used in relation to grouping changes is beyond the scope of the present invention and thus will not be described in detail.

Referring to FIG 3, the system is configured to have a modulator 300, a plurality of partial IFFTs 310 to 312, a plurality of adders 320 to 322, a transmit antenna 330, a receive antenna 340, a feedback information generator 350, and a subcarrier allocator 360.

The modulator 300 modulates input data. The number G of the partial IFFTs 310 to 312 is determined according to the number of available subcarriers and coherent bandwidth. The partial IFFTs 310 and 312 load modulated signals received from the modulator 300 on the subcarriers of predetermined groups under the control of the subcarrier allocator 360. The subcarriers of a group can be successive, as described above.

The first partial IFFT 310 allocates the received modulated signals to the subcarriers of a first group. The Gth partial IFFT 312 allocates the received modulated signals to the subcarriers of a Gth group. The adder 320 adds the IFFT signals received from the first partial IFFT 310 and the adder 322 adds the IFFT signals received from the Gth partial IFFT 312. The adders 320 to 322 transmit the sum signals through the transmit antenna 330 on a radio channel.

The receive antenna 340 provides a signal received on the subcarriers from the transmit antenna 330 to the feedback information generator 350. The feedback information generator 350 measures the channel statuses of the subcarriers, generates feedback information for the individual subcarrier groups, and transmits the feedback information to the subcarrier allocator 360. Operation of the feedback information generator 350 will be described in greater detail below. The subcarrier allocator 360 selects a subcarrier group for the UE based on the per-group feedback information and tells the partial IFFTs 310 to 312 the selected subcarrier group. The Node B transmits data to the UE on the selected subcarrier group.

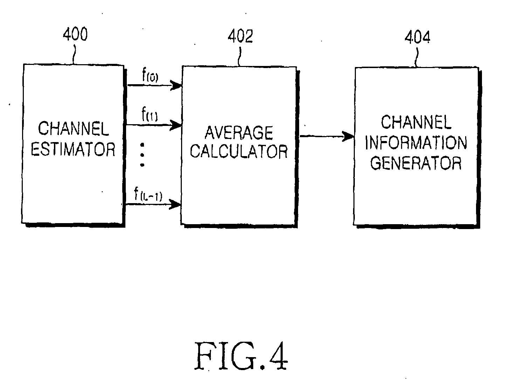

FIG. 4 is a block diagram of the feedback information generator 350 illustrated in FIG. 3. The feedback information generator 350 includes a channel estimator 400, an averager 402, and a channel information generator 404.

The channel estimator 400 calculates various channel estimation values for each subcarrier, inclusive of SIR, SINR (Signal-to-Noise and Interference Ratio), BRE (Bit Error Rate), FER (Frame Error Rate), and CNR. The channel status is estimated by calculating SIR herein. While the SIRs of the subcarriers of one group are measured in FIG 4, the channel estimator 400 performs channel estimation on all received subcarriers.

The averager 402 calculates the average of the SIRs of subcarriers for each group by

$$SIR_g = \frac{1}{L} \sum_{f=L(g-1)}^{LG-1} SIR_j$$

$$\ldots \ldots (1)$$

where SIRg denotes the average of the channel estimation values of the subcarriers in a gth group, SIR$_j$ denotes the channel estimation value of a jth subcarrier, L denotes the number of the subcarriers in the gth group, G denotes the maximum number of g, that is, the total number of subcarrier groups, and f denotes the index of a subcarrier. When receiving the channel estimation values of all subcarriers, the average 402 computes Eq. (1). Table 2 below lists the average channel estimation values of the individual subcarrier groups output from the averager 402.

Table 2

| Subcarrier group | Average channel estimation value |
|---|---|
| First group | B |
| Second group | A |
| Third group | E |
| Fourth group | C |
| ... | ... |
| Gth group | G |

The channel information generator 404 maps the average channel estimation values to predetermined values according to a predetermined rule, as illustrated in Table 3.

Table 3

| Average channel estimation value | Mapping value |
|---|---|
| A to B | 00 |
| C to D | 01 |
| E | 10 |
| F to G | 11 |

If the mapping value is 2 bits, the average channel estimation values are classified into four levels as in Table 3. The range of the average channel estimation value at each level can be controlled by user selection. While the average channel estimation values are classified into four levels in Table 3, the number of levels can be set to 2 or more by user selection. Yet, when the average channel estimation values are sorted into too many levels, the number of bits required to represent mapping values increases, thereby increasing the amount of data to be transmitted on the uplink. Therefore, the number of mapping levels to be used must take into account the amount of data on the uplink and radio resources.

In an embodiment of the present invention, since high and low average channel estimation values are produced with a relatively low probability, the ranges of average channel estimation values mapped to 00 and 11 are set to be wide, A to B and F to G, respectively. On the other hand, since the probability of average channel estimation values is relatively high, an average channel estimation value range mapped to 10 is set to be narrow, E. Thus, the probabilities of generating the mapping values can be maintained almost the same.

In an embodiment of the present invention, the mapping values can be set by comparing the average channel estimation values rather than considering their generation probabilities. Given four groups, 00 is allocated to a group with the highest-average channel estimation value and 01, 10 and 11 are allocated sequentially to the other groups in a descending order of average channel estimation value. These embodiments are mere exemplary applications and thus setting of the mapping values varies depending on configuration.

Table 4 illustrates an example of feedback information that the channel information generator 404 provides to the subcarrier allocator 360 on the transmitting side.

Table 4

| Subcarrier group | Feedback information |
| --- | --- |
| First group | 00 |
| Second group | 11 |
| Third group | 10 |
| Fourth group | 01 |
| ... | ... |
| Gth group | 11 |

It is assumed that the feedback information has a higher priority in the order of 00, 01, 10 and 11 in Table 4. The subcarrier allocator 360 selects a subcarrier group for the UE based on the feedback information. Upon receipt of the feedback information illustrated in Table 4, the subcarrier allocator 360, if it is to allocate one subcarrier group to the UE, selects group #0. For two subcarrier groups, the subcarrier allocator 360 selects group #0 and group #4 for the UE.

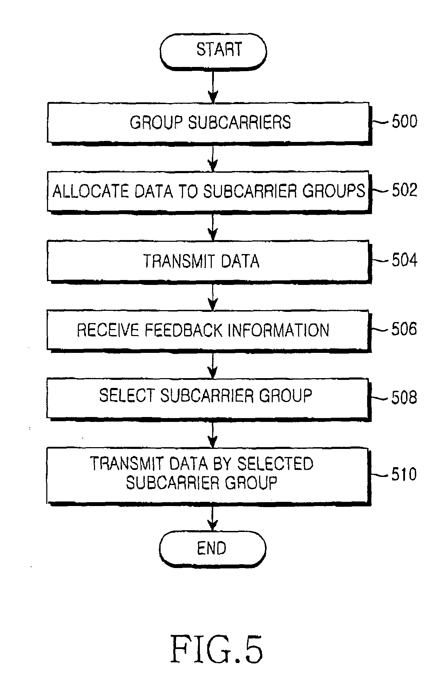

FIG 5 is a flowchart illustrating an operation in the Node B according to the preferred embodiment of the present invention.

Referring to FIG. 5, the Node B groups all available subcarriers in step 500. The number of subcarrier groups is determined according to the number of the subcarriers and a coherent bandwidth. Each subcarrier group includes adjacent subcarriers. The subcarriers of the subcarrier groups can be changed in an every predetermined time period to prevent continuous allocation of the same subcarriers (i.e. the same bandwidth) to a particular user.

For example, if subcarriers #0 to #5 belong to a first group, the first group can replace them with subcarriers #2 to #7 a predetermined time later. Another predetermined time later, the first group may have subcarriers #4 to #9. Hence, the other subcarrier groups have different subcarriers. Aside from the periodic re-allocation of subcarriers to the subcarrier groups, the subcarrier groups can be reset when the channel environment faces a rapid change or an upper layer requests a subcarrier group resetting.

The Node B allocates transmission data to the subcarrier groups in step 502 and the transmits the transmission data on the subcarriers of the groups in step 504.

In step 506, the Node B awaits receipt of feedback information. The Node B selects a subcarrier group to be assigned to the UE based on received feedback information in step 508. The Node B arranges the feedback information of the respective subcarrier groups in the order of better channel status and selects the subcarrier group for the UE. In step 510, the Node B transmits data to the UE on the subcarriers of the selected subcarrier group.

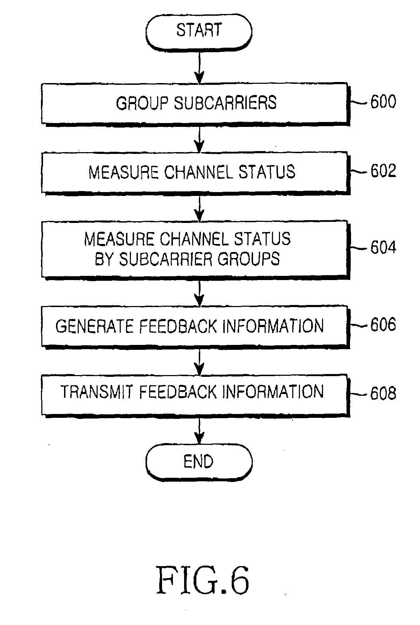

FIG. 6 is a flowchart illustrating an operation in the UE according to an embodiment of the present invention.

Referring to FIG. 6, the UE groups all available subcarriers in step 600. The resulting subcarrier groups are identical to those set in the Node B. The UE can receive information about the setting of the subcarrier groups from the Node B on a radio channel different from or identical to the radio channel on which it receives data.

The UE measures the channel statuses, particularly SIRs or CNRs of the subcarriers, in step 602. In step 604, the UE sorts the channel status measurements by subcarrier groups and calculates the average of the channel status measurements for each of the subcarrier groups. Instead of calculating the average channel status measurement, the Node B can calculate the sum of channel status measurements for each subcarrier group. The average or sum becomes the channel quality information of the subcarrier group.

The UE generates feedback information based on the channel quality information of each subcarrier group in step 606, as illustrated in Table 3. In the case where the channel status measurements of the subcarriers of each subcarrier group are summed, the UE uses the channel estimation sum rather than the average channel estimation value shown in Table 3. Irrespective of the average channel estimation value or the channel estimation sum, mapping is done in the same manner.

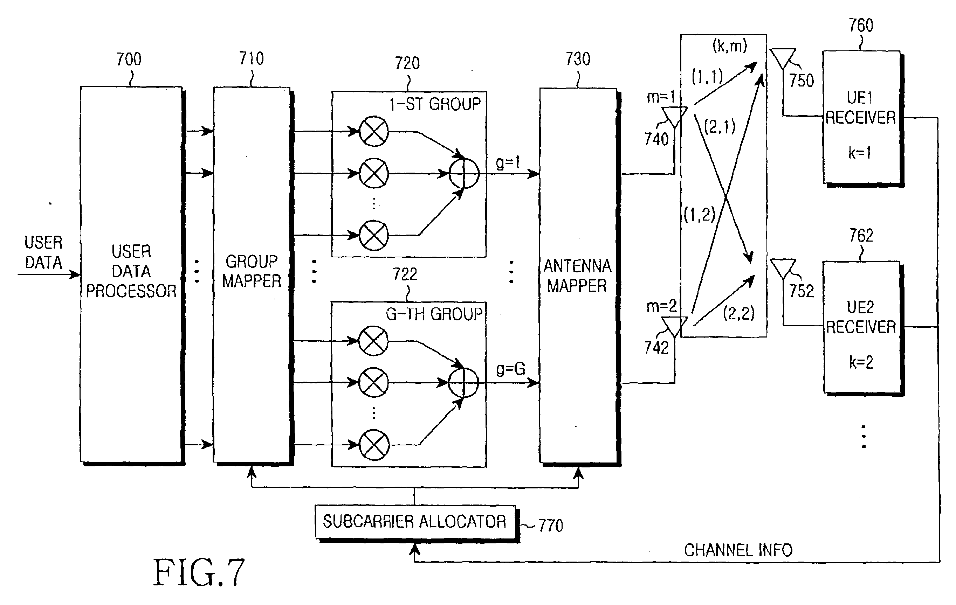

Up to this point, subcarrier allocation has been described in the context of a mobile communication system using one transmit antenna and one receive antenna. Now, a description will be made of subcarrier allocation in a mobile communication system having a plurality of transmit antennas and a plurality of receive antennas. FIG. 7 is a block diagram of a configuration of an OFDM mobile communication system using a plurality of transmit antennas for data transmission. As illustrated in FIG. 7, the transmit antennas transmit data on a plurality of subcarriers at a predetermined frequency.

Referring to FIG. 7, the OFDM mobile communication system is comprised of a user data processor 700, a group buffer 710, a plurality of partial IFFTs 720 to 722, an antenna mapper 730, a plurality of transmit antennas 740 to 742, a subcarrier allocator 770, and UE receivers 760 and 762 having receive antennas 750 and 752, respectively. In the illustrated case, two transmit antennas 740 to 742 and one receive antenna 750 or 752 for one UE receiver 760 or 762 are used.

The user data processor 700 processes an input signal and converts the processed signal to as many parallel symbol sequences as the number of the subcarriers used. The group mapper 710 maps the parallel symbol sequences to the plurality of partial IFFTs 720 to 722 under the control of the subcarrier allocator 770. The number of the partial IFFTs 720 to 722 is determined according to the number of the subcarriers, the coherent bandwidth, and the number of the transmit/receive antennas.

The partial IFFTs 720 to 722 allocate the received symbols to the subcarriers of the subcarrier groups corresponding to them. Each subcarrier group can include adjacent subcarriers. The symbols input to the first partial IFFT 720 are allocated to the subcarrier of a first group, added, and then provided to the antenna mapper 730. The symbols input to the Gth partial IFFT 722 are allocated to the subcarriers of a Gth group, added and then provided to the antenna mapper 730.

The antenna mapper 730 maps the outputs of the partial IFFTs 720 to 722 to the transmit antennas 740 to 742 under the control of the subcarrier allocator 770. The antenna mapper 730 can map the subcarrier of one group to one or more antennas. The subcarrier of the first group is transmitted through at least one of the transmit antennas 740 to 742.

The receive antennas 750 and 752 receive the signals from the transmit antennas 740 and 742. The receive antenna 740 provides the received signals to the first UE receiver 760 and the receive antenna 742 provides the received signals to the second UE receiver 762.

The UE receivers 760 and 762 generate feedback information about the subcarrier groups and transmit it to the subcarrier allocator 770 of the Node B on uplink channels. The subcarrier allocator 770 controls the group mapper 710 and the antenna mapper 730 based on the feedback information.

The plurality of transmit and receive antennas are considered in generating the feedback information in the UE receivers 760 and 760. Hence, this feedback information is larger in amount than that generated in the feedback information generator 350 illustrated in FIG. 3. The UE receivers 760 and 762 construct feedback information for the respective transmit antennas as illustrated in Table 5a. Table 5a tabulates feedback information generated in the UE receivers 760 and 762 having the single receive antennas 750 and 752, respectively. In the case of a Node B having a plurality of transmit antennas providing an OFDM service to a UE having a plurality of receive antennas, the UE receiver generates CQIs for the respective receiver antennas as well as the transmit antennas, as illustrated in Table 5b.

Table 5a

|  | First group | Second group | ... | Gth group |
|---|---|---|---|---|
| Transmit antenna 740 | 00 | 01 | ... | 11 |
| Transmit antenna 742 | 01 | 10 | ... | 01 |
| ... | ... | ... | ... | ... |
| Transmit antenna 744 | 01 | 10 | ... | 00 |

Table 5b

|  | First group | Second group | ... | Gth group |
|---|---|---|---|---|
| First transmit antenna, First receive antenna | 00 | 01 | ... | 11 |
| First transmit antenna, Second receive antenna | 01 | 00 | ... | 01 |
| Second transmit antenna, First receive antenna | 11 | 11 | ... | 10 |
| Second transmit antenna, Second receive antenna | 01 | 10 | ... | 00 |

The UE receivers 760 and 762 each generate feedback information by subcarrier groups and transmit antennas, or by subcarrier groups, transmit antennas and receive antennas, as illustrated in Table 5a and Table 5b, and provide it to the subcarrier allocator 770 of the Node B. The subcarrier allocator 770 selects a subcarrier group and a transmit antenna to be allocated to each receive antenna and controls the partial IFFTs 720 to 722 and the antenna mapper 730 based on the feedback information.

Table 6a below lists feedback information received in the subcarrier allocator 770 with respect to transmit antennas and UEs. Table 6a e is concerned with the situation in which a Node B having two transmit antennas services two UEs in an OFDM mobile communication system. The subcarrier allocator 770, receiving feedback information illustrated in Table 5a from each of two UEs, sorts the feedback information as in Table 6a.

Table 6b lists feedback information received in the subcarrier allocator 770 with respect to transmit antennas and UEs. Table 6b is concerned with the situation in which a Node B having two transmit antennas services two UEs each having two receive antennas in an OFDM mobile communication system. The subcarrier allocator 770, receiving feedback information illustrated in Table 5b from each of two UEs, sorts the feedback information as in Table 6b.

Table 6a

|  | First group | Second group | ... | Gth group |
|---|---|---|---|---|
| First transmit antenna, UE 1 | 00 | 01 | ... | 11 |
| First transmit antenna, UE 2 | 01 | 00 | ... | 01 |
| Second transmit antenna, UE 1 | 11 | 11 | ... | 10 |
| Second transmit antenna, UE 2 | 01 | 10 | ... | 00 |

In Table 6a, it is noted that UE 1 is placed in the best channel status when the Node B transmits data on the subcarriers of the first group via the first transmit antenna, and UE 2 is placed in the best channel status when the Node B transmits data on the subcarriers of the Gth group via the second transmit antenna. Therefore, the subcarrier allocator 770 decides to transmit data on the subcarriers of the first group via the first transmit antenna for UE 1, and on the subcarriers of the Gth group via the second transmit antenna for UE 2.

If there are a plurality of transmit antennas and a plurality of subcarrier groups that lead to a good channel status for a UE, the Node B prioritizes them according to a QoS level and service type requested by the UE. If UE 1 requests packet data, UE 2 requests circuit data, and the same transmit antenna and subcarrier group bring the best channel status for both UE 1 and UE 2. The subcarrier allocator 770 serves UE 1 over UE 2 with priority. This, however, is a mere exemplary application and thus the criterion to allocate subcarriers is set depending on system implementation.

Table 6b

|  | First group | Second group | Third group | ... | Gth group |
|---|---|---|---|---|---|
| First transmit antenna, UE 1 first receive antenna | 00 | 01 | 10 | ... | 11 |
| First transmit antenna, UE 1 second receive antenna | 01 | 00 | 11 | ... | 01 |
| Second transmit antenna, UE 1 first receive antenna | 11 | 11 | 01 | ... | 10 |
| Second transmit antenna, UE 1 second receive antenna | 01 | 10 | 11 | ... | 00 |

Table 6b   (continued)

|  | First group | Second group | Third group | ... | Gth group |
|---|---|---|---|---|---|
| First transmit antenna, UE 2 first receive antenna | 01 | 01 | 00 | ... | 11 |
| First transmit antenna, UE 2 second receive antenna | 10 | 10 | 01 | ... | 01 |
| Second transmit antenna, UE 2 first receive antenna | 11 | 11 | 01 | ... | 10 |
| Second transmit antenna, UE 2 second receive antenna | 01 | 00 | 10 | ... | 11 |

From Table 6b, it is noted that UE 1 is placed in the best channel status when the Node B transmits data to the first receive antenna on the subcarriers of the first group via the first transmit antenna, or when the Node B transmits data to the second receive antenna on the subcarriers of the Gth group via the second transmit antenna. UE 2 is placed in the best channel status when the Node B transmits data to the second receive antenna on the subcarriers of the second group via the second transmit antenna, or when the Node B transmits data to the first receive antenna on the subcarriers of the third group via the first transmit antenna.

Therefore, the subcarrier allocator 770 decides to transmit data to UE 1 on the subcarriers of the first group using the first transmit antenna and the first receive antenna, or on the subcarriers of the Gth group using the second transmit antenna and the second receive antenna. The subcarrier allocator 770 decides to transmit data to UE 2 on the subcarriers of the second group using the second transmit antenna and the second receive antenna, or on the subcarriers of the third group using the first transmit antenna and the first receive antenna.

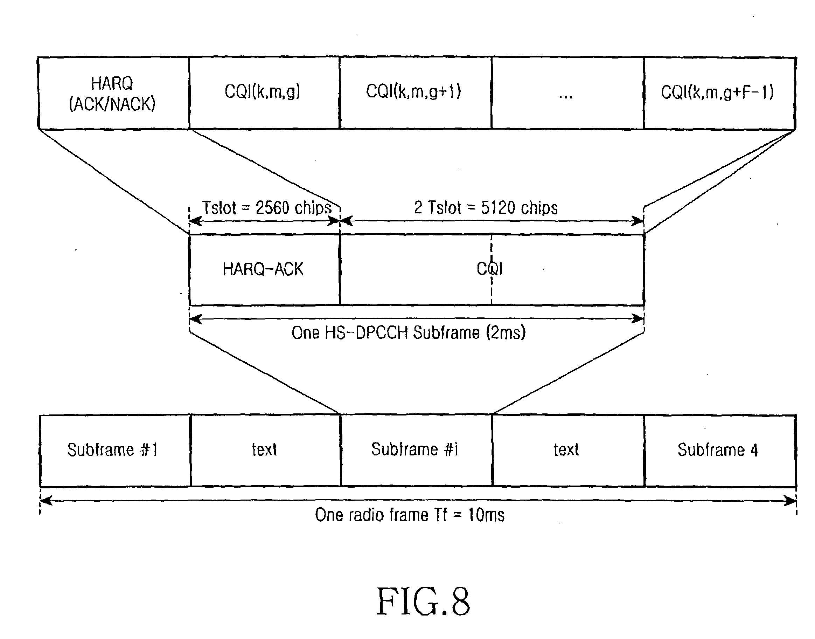

FIG. 8 illustrates the structure of an uplink channel that delivers the channel quality indicator (CQI) of each subcarrier group to a Node B according to an embodiment of the present invention. An existing WCDMA system estimates an SIR using a CPICH (Common Pilot CHannel) and determines a CQI such that the total throughput is maximized. The CQI is transmitted in a 2-ms subframe on an HS-DPCCH (High Speed Dedicated Physical Control Channel). The HS-DPCCH delivers control information related to an HS-DSCH (High Speed Downlink Shared Channel) that transmits downlink packet data for HSDPA service.

20 bits are actually transmitted in the subframe. 5 of the bits are information bits and the other 15 bits are redundancy bits. Therefore, a UE represents 31 CQIs in the 5 bits. A CQI is used in deciding a modulation/demodulation scheme and a transport block size.

As described above, each UE estimates the SIR of a total carrier band using the CPICH, decides a CQI according to the SIR so as to maximize the total throughput, and transmits the CQI together with an HARQ (Hybrid Automatic Retransmission reQuest), ACK/NACK (Acknowledgement/Negative Acknowledgement) signal in a 2-ms subframe on the HS-DPCCH in the existing WCDMA system. In an embodiment of the present invention, however, the UE estimates the SIR of each subcarrier group rather than the SIR of the total carrier band, decides a CQI for the subcarrier group based on the SIR, and transmits the per-group CQIs together with the HARQ ACK/NACK signal in a 2-ms HS-DPCCH subframe. The HS-DPCCH subframe is divided into three slots.

The first of them delivers the HARQ ACK/NACK information and the other two slots deliver the CQIs measured by the UE.

In the illustrated case of FIG 8, a kth UE transmits feedback information about subcarrier signals received from an mth transmit antenna. The subcarriers are grouped into F groups, #g to #(g+F-1). The UE transmits the CQIs of the subcarrier groups in CQI areas of the subframe, sequentially starting with group g. The Node B determines a subcarrier group to be allocated to the UE based on the CQI information of the F subcarrier groups. A CQI feedback period by which the position of a subframe for delivering the CQI information to the Node B is determined by signaling from an upper layer.

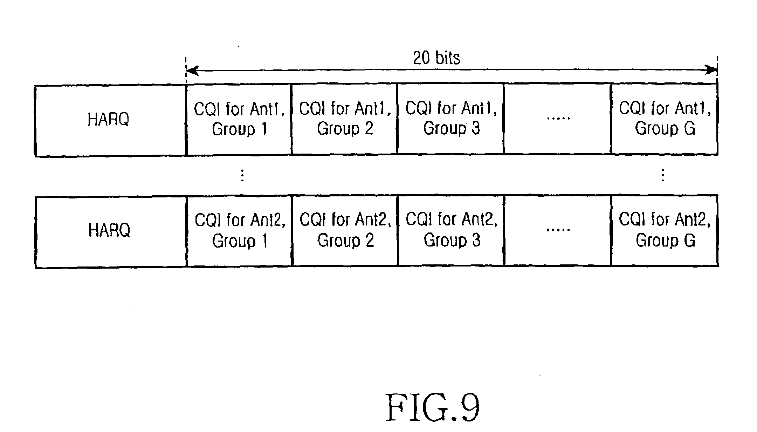

FIG. 9 illustrates the transmission format of feedback information to a Node B having two transmit antennas according to an embodiment of the present invention.

Referring to FIG. 9, the UE transmits the CQIs of subcarrier groups received from a first transmit antenna of the Node B and then the CQIs of the subcarrier groups received from a second transmit antenna. The subcarriers are divided into G subcarrier groups and each CQI is for a particular subcarrier group from a particular transmit antenna. The UE transmits the CQI information in 20 bits available for the CQI delivery in the HS-DPCCH subframe. As more bits are required to represent one CQI, the number of subcarrier groups representable by one subframe is decreased.

In the illustrated case of FIG 9, one subframe delivers the CQIs of all subcarrier groups transmitted by one transmit antenna. In the case where it is impossible to transmit the CQIs of all subcarrier groups transmitted by one transmit antenna in one subframe, the next subframe is used. In FIG. 9, after transmitting the CAQI s of the subcarrier groups transmitted by the first transmit antenna, the UE transmits the CQIs of the subcarrier groups transmitted by the second transmit antenna. It can be further contemplated, as another embodiment of the present invention, that after transmitting the CQIs of the first group, the UE transmits the CQIs of the following groups, sequentially. While two subframes are shown in parallel in FIG 9, it should be apparent to those skilled in the art of the present invention that the two subframes are transmitted serially at a predetermined time interval in real implementation.

The Node B decides a subcarrier group for the UE based on the CQI information and transmits data to the UE on the subcarrier group. Since the CQI of a subcarrier group is the average of the CQIs of the subcarriers in the subcarrier group, it is impossible to achieve the accurate CQI information of a particular subcarrier. In this context, the present invention proposes a method of further dividing each of the subcarrier groups into a plurality of subgroups and transmitting the CQIs of the subgroups in another embodiment.

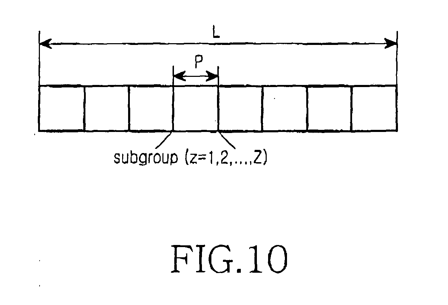

FIG. 10 illustrates the structure of subgroups according to an embodiment of the present invention. FIG. 10 illustrates one subcarrier group that includes L subcarriers, and is divided into Z subgroups, subgroups #1 to #Z. Each subgroup has P subcarriers. Thus, L=PxZ.

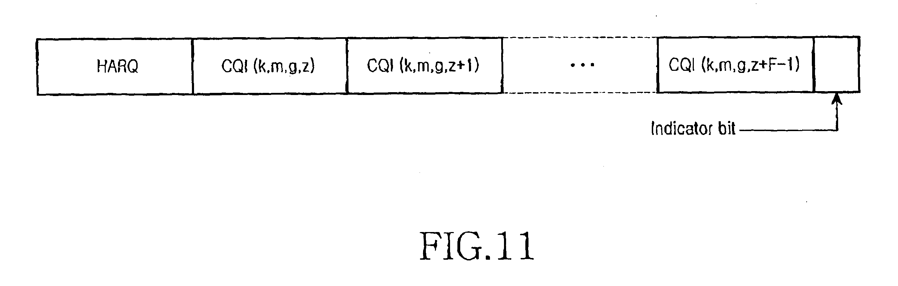

FIG 11 illustrates the transmission format of the CQIs of the F subgroups according to an embodiment of the present invention.

Referring to FIG. 11, the F subgroups are subgroups #z to #(z+F-1). The index of a UE is denoted by a k, m denotes the index of a transmit antenna, and g denotes the index of a subcarrier group. In the illustrated case, a kth UE transmits the CQI information of the subgroups of a gth subcarrier group allocated to an mth transmit antenna. Compared to the transmission format illustrated in FIG 8, this transmission format contains an indicator indicating that this transmission format is about subgroups. The indicator is one or more bits according to user selection or the number of the CQI bits transmitted.

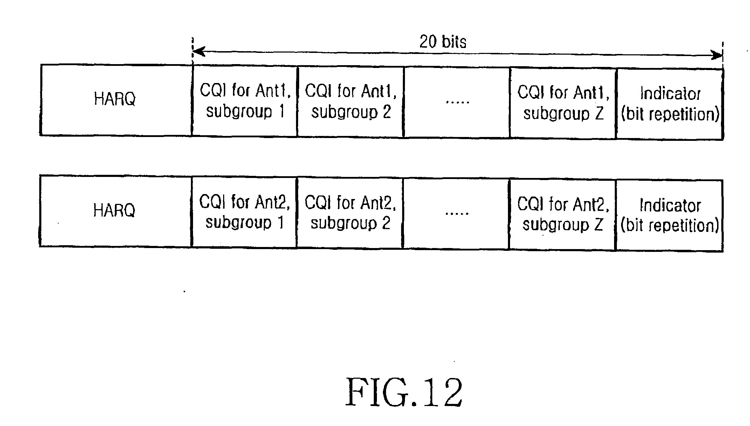

FIG. 12 illustrates the transmission format of feedback information to a Node B having two transmit antennas according to an embodiment of the present invention.

Referring to FIG. 12, the UE transmits the CQIs of subgroups #1 to #Z in a particular subcarrier group received from a first transmit antenna of the Node B in one subframe and then the CQIs of subgroups #1 to #Z of the subcarrier group received from a second transmit antenna in the next subframe. The UE transmits the CQIs in some of 20 bits available for the CQI delivery in one subframe and an indicator indicating a subgroup transmission format in the remaining bits. As more bits are required to represent one CQI, the number of subgroups representable by one subframe is decreased.

In the illustrated case of FIG. 12, one subframe delivers the CQIs of all subgroups in a subcarrier groups transmitted by one transmit antenna. In the case where it is impossible to transmit the CQIs of all subgroups of a subcarrier group transmitted by one transmit antenna in one subframe, the next subframe is used. In FIG 12, after transmitting the CQI s of the subgroups of a subcarrier group transmitted by the first transmit antenna, the UE transmits the CQIs of the subgroups of the subcarrier groups transmitted by the second transmit antenna. In another embodiment of the present invention, after transmitting the CQIs of the first subgroup, the UE transmits the CQIs of the following subgroups, sequentially. While two subframes are shown in parallel in FIG 12, it should be apparent to those skilled in the art of the present invention that the two subframes are transmitted serially at a predetermined time interval in real implementation.

According to the embodiments of the present invention as described above, subcarriers are grouped into a plurality of groups and the CQIs of the respective subcarrier groups are transmitted. Since each subcarrier group includes two or more subcarriers, the subcarrier group is further divided into subgroups to thereby acquire more accurate channel quality information of the subcarriers of the subcarrier group. When the channel status varies significantly, however, only the channel status information of each subcarrier group can be transmitted. Depending on the channel status change and available radio resources, it is determined whether to transmit the channel status information of the subcarrier groups or the subgroups of the subcarrier groups.

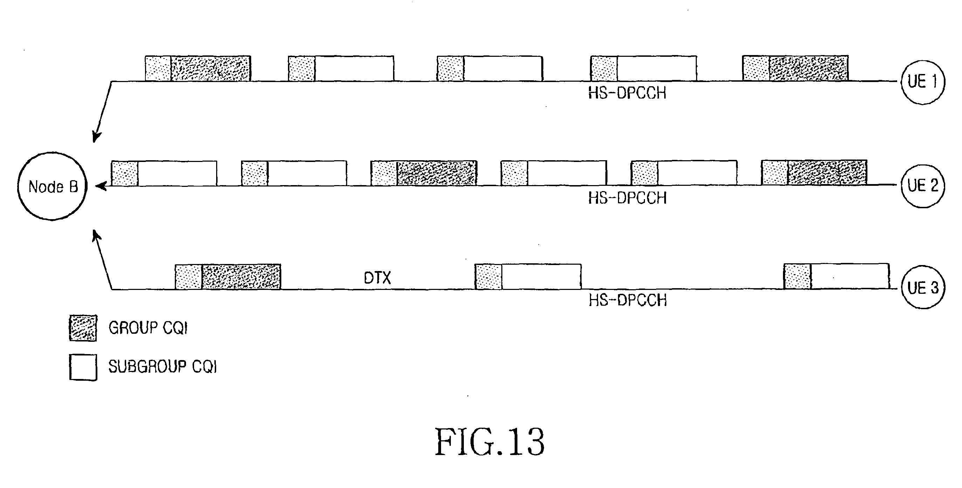

FIG. 13 is a timing diagram illustrating CQI timings of subcarrier groups and subgroups in a mobile communication system having one Node B and three UEs according to a third embodiment of the present invention.

Referring to FIG 13, after transmitting the CQI of an allocated subcarrier group in one subframe, UE 1 transmits the CQIs of subgroups of the subcarrier group in the following three subframes marked with empty rectangles in FIG. 13. In the case where the subgroup CQIs are not completely transmitted in one subframe, additional subframes can be used as illustrated in FIG. 13.

UE 2, after transmitting the CQI of an allocated subcarrier group in one subframe, transmits the CQIs of the subgroups of the subcarrier group in the following two subframes.

As can be seen from FIG. 13, the CQI period of the subcarrier groups (three subframes) for UE 2 is shorter than that (four subframes) for UE 1. This is because UE 2 is placed in an unstable channel status, relative to UE 1.

Meanwhile, UE 3 transmits the CQI of an allocated subcarrier group in one subframe and then the CQIs of the subgroups of the subcarrier group in two subframes. The CQI period for UE 3 is longer than the CQI transmission periods of UE 1 and UE 2. This implies that UE 3 is placed in the most stable channel status.

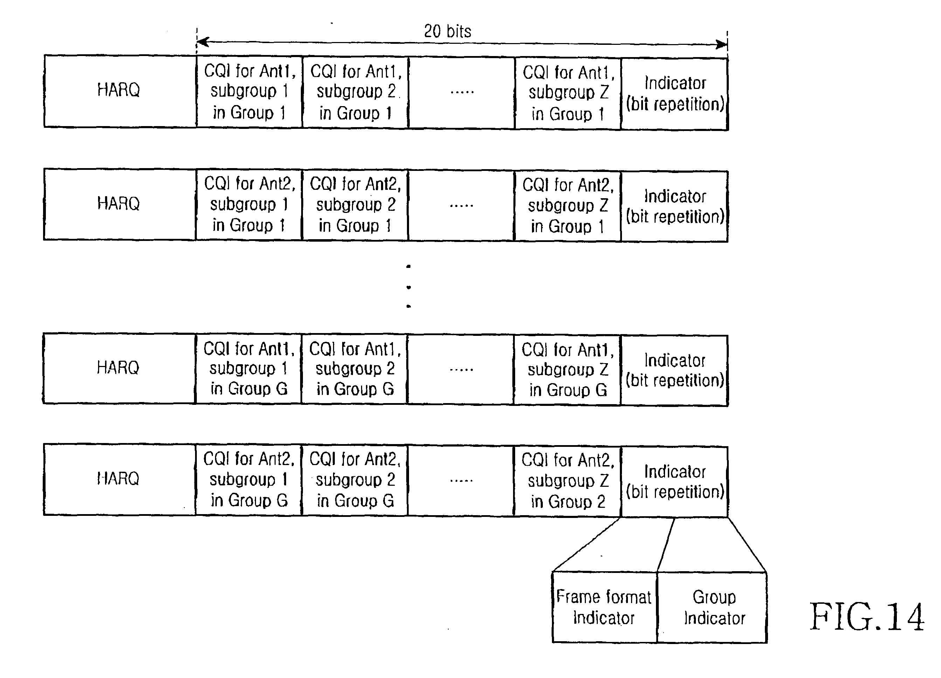

FIG 14 illustrates transmission of the CQIs of the subgroups of G allocated subcarrier groups from a UE according to an embodiment of the present invention. Subcarrier group 1 to subcarrier group G are transmitted via first and second transmit antennas Ant 1 and Ant 2 from a Node B. The UE transmits the CQIs of the subgroups of the subcarrier groups.

The UE transmits the CQIs of subgroup 1 to subgroup Z in subcarrier group 1 transmitted from Ant 1 in a first subframe, and the CQIs of subgroup 1 to subgroup Z in subcarrier group 1 transmitted from Ant 2 in a second subframe. In the same manner, the UE transmits the CQIs of subgroup 1 to subgroup Z in subcarrier group G transmitted from Ant 1 in a (2G-1)th subframe and the CQIs of subgroup 1 to subgroup Z in subcarrier group G transmitted from Ant 2 in a 2Gth subframe.

Each subframe has CQI information in part of the 20 bits and an indicator in the remaining bits. If the remaining bits are sufficient, the indicator is filled in them through bit repetition. The indicator includes a frame format indicator and a subcarrier group indicator. The frame format indicator indicates a subframe transmission format and the subcarrier group indicator indicates a subcarrier group the subgroup CQIs of which are transmitted in the subframe. While the subframes are shown in parallel, as would be apparent to one skilled in the art of the present invention, the subframes are transmitted serially at predetermined intervals in real implementation.

The operation described above can be summarized as follows. The Node B allocates appropriate subcarrier groups to UEs referring to a resource map by an allocation algorithm. Antennas can be chosen on a subcarrier group basis. After being allocated to different subcarrier groups, the UEs are notified of antennas to which the subgroups of the subcarrier groups are mapped. The subcarrier group/subgroup allocation is periodically performed in the subcarrier allocator 770. The allocation period is several to tens of TTIs (Transmit Time Intervals).

The UEs generates the CQI of each subcarrier group or each subgroup of the subcarrier groups. Transmission of CQI information on a per-subcarrier group basis is called mode 1, whereas transmission of CQI information on a per-subgroup basis is called mode 2.

In Mode 1, CQIs are calculated for all cases of a kth user, that is, for m antennas and g subcarrier groups (m=1, 2, ..., M, g=1, 2, ... , G), as follows. The SIR of an nth subcarrier (n=1, 2, ..., N) transmitted is determined by

$$SIR = \rho_{k,n,m} \tag{2}$$

The SIRs of each subcarrier group computed by Eq. (2) are arithmetically averaged. In computing the SIR, the UE maps CPICH power to HS-PDSCH power according to a WCDMA standard, 3GPP (3rd Generation Partnership Project) TS25.214 by

$$P_{HSPDSCH} = P_{CPICH} + \Gamma + \Delta \tag{3}$$

where $\Gamma$ *is the measurement power offset signalled by higher layer and* $\Delta$ *is given by CQI mapping table in TS25.124.*

The average SIR of each subcarrier group is computed by

$$\overline{\rho}_{k,m}^{(g)} = \sum_{n=L(g-1)}^{Lg-1} \rho_{k,n,m}, \quad g = 1, 2, \ldots, G$$

$$\ldots \ldots (4)$$

Using Eq. (4), CQI bits can be generated by Eq. (5). A CQI mapping function roughly expresses a channel status by an average SIR. Depending on configuration, a variety of CQI mapping functions are available. For example, the CQI mapping function produces CQI(k, m, g) by linearly mapping the average SIRs or achieving the lognormals of the average SIRs and mapping them in terms of decibel.

$$CQI(k,m,g) = f\left(\overline{\rho}_{k,m}^{(g)}\right)$$

$$where \; f(\bullet) \; is \; CQI \; mapping \; function$$

$$\ldots \ldots (5)$$

If CQIs are expressed in two bits, CQI(k, m, g) can be mapped according to channel status as follows.

CQI (k, m, g)=11 (high quality)
CQI (k, m, g)=10 (medium quality)
CQI (k, m, g)=01 (medium quality)
CQI (k, m, g)=00 (low quality)

The kth UE transmits CQI (k, m, g) calculated in mode 1 to the Node B in an uplink HS-DPCCH subframe. The UE attempts to transmit F CQIs in subframes for one TTI. If the F CQIs are not completely transmitted, the remaining CQIs are transmitted for the next TTI. In mode 1, the Node B updates the resource map based on the reported CQIs and periodically allocates subcarriers referring to the resource map.

In mode 2, CQIs can be transmitted on a subgroup basis. The Node B gets the average SIR of a smaller unit (i.e. subgroup). L subcarriers of a gth subcarrier group are divided into Z subgroups, each having P subcarriers. Thus, L=ZxP. Then, the lognormal mean SIR of each subgroup is computed by

$$\overline{\rho}_{k,m}^{(g,z)} = \sum_{n=gL+P(z-1)}^{gL+Pz-1} \rho_{k,n,m}, \quad z = 1, 2, \ldots, Z$$

$$\ldots \ldots (6)$$

The lognormal mean SIR is mapped to a CQI by

$$CQI(k,m,g,z) = f\left(\overline{\rho}_{k,m}^{(g,z)}\right)$$

$$where \; f(\bullet) \; is \; CQI \; mapping \; function$$

$$\ldots \ldots (7)$$

The UE then transmits the CQI to the Node B in the same manner as in mode 1.

In mode 2, the Node B can select antennas on a subgroup basis. F CQIs, CQI(k, m, g) 's or CQI (k, m, g, z) 's are transmitted per TTI. Mode 2 leads a diversity gain by transmission of CQI (k, m, g, z), and allows the Node B to update the resource map by transmission of CQI(k, m, g).

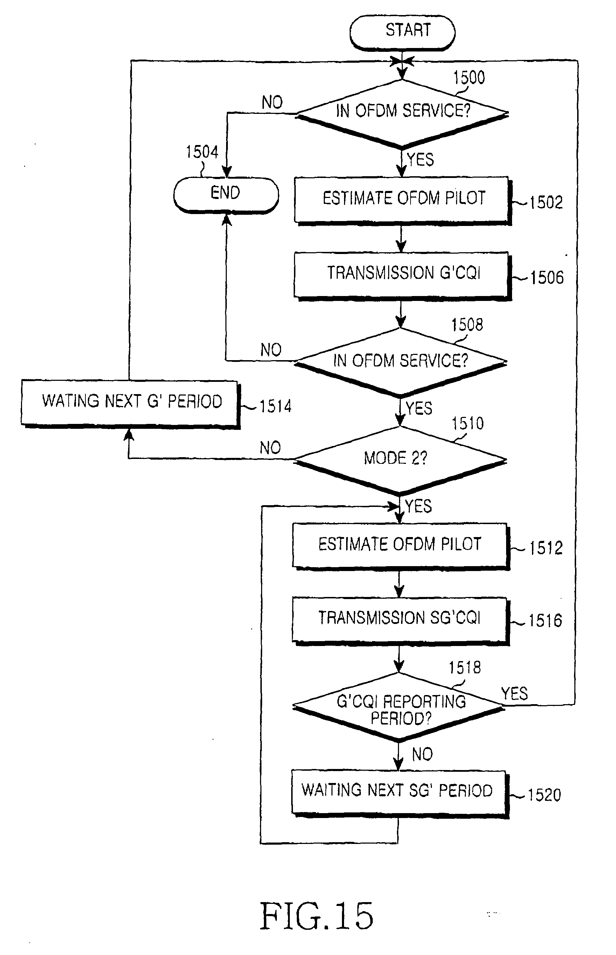

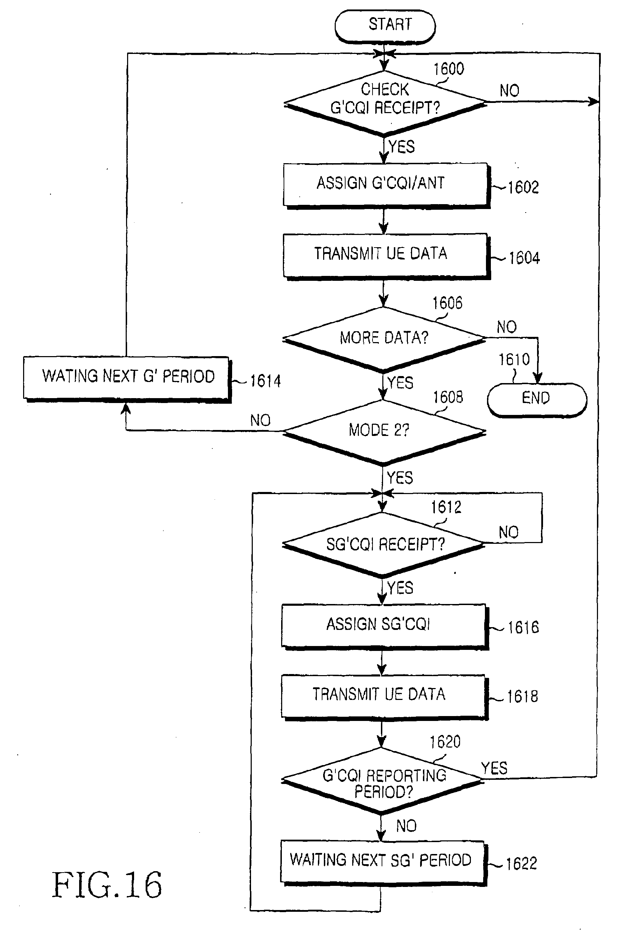

Hereinbelow, operations in the UE and the Node B will be described with reference to FIGs. 15 and 16. FIG. 15 is a flowchart illustrating the UE operation according to an embodiment of the present invention.

Referring to FIG. 15, the UE determines whether it is in an OFDM service in decision step 1500. The determination is made by checking whether data is received on an OFDM channel or a subcarrier allocation control signal is received from the network, or based on any other criterion. If the OFDM service is supported ("Yes" path from decision step 1500), the UE goes to step 1502.. If the OFDM service is not supported ("No" path from decision step 1500), the UE terminates the procedure in step 1504.

In step 1502, the UE channel-estimates its allocated subcarrier groups. The channel estimation is the process of measuring the channel statuses of the subcarrier groups and generating CQIs (G'CQIs) for the subcarrier groups based on the channel statuses. An OFDM pilot or any other predetermined signal can be used in the channel estimation. The UE transmits the G'CQIs to the Node B in step 1506 and determines again whether it receives the OFDM service in decision step 1508. If it does ("Yes" path from decision step 1508), the UE moves to decision step 1510 and if not, the UE terminates the procedure in step 1504 ("No" path from decision step 1508).

In step decision 1510, the UE determines whether it is to operate in mode 2 according to its channel status or a system indication from upper layer signaling. If the UE is to operate in mode 2 ("Yes" path from decision step 1510), it goes to step 1512. If the UE is not to operate in mode 2 ("No" path from decision step 1500), it goes to step 1514. In step 1514, the UE waits until the next subcarrier group CQI period (G'period).

In step 1512, the UE channel-estimates the subgroups of the allocated subcarrier groups and generates CQIs for the subgroups (SG'CQIs). An OFDM pilot signal or any other predetermined signal can be used in the channel estimation, The UE transmits the SG'CQIs to the Node B in step 1516 and checks the G'CQI period in decision step 1518. Upon expiration of the G'CQI period ("Yes" path from decision step 1518), the UE returns to step 1500. If the G'CQI period has not elapsed ("No" path from decision step 1518), the UE waits until the next SG' period in step 1512.

FIG 16 is a flowchart illustrating the Node B operation according to an embodiment of the present invention.

Referring to FIG. 16, the Node B determines whether G'CQIs have been received in decision step 1600. If they have ("Yes" path from decision step 1600), the Node B goes to step 1602. If they have not, the Node B stays in step 1600 ("No" path from decision step 1600). In step 1602, the Node B allocates transmit antennas and subcarrier groups to UEs based on the G'CQIs. The Node B transmits data to the UEs using the allocated subcarrier groups and antennas in step 1604 and determines whether data still remains for a particular UE in decision step 1606. If data remains ("Yes" path from decision step 1606), the Node B goes to decision step 1608 and otherwise, it terminates the procedure in step 1610 ("No" path from decision step 1608).

In decision step 1608, the Node B determines whether to perform mode 2 according to the channel status of the UE or a system indication. If mode 2 is not to be performed ("No" path from decision step 1608), the Node B awaits reception of G'CQIs in the next CQI period in step 1614. If mode 2 is to be performed ("Yes" path from decision step 1608), the Node B determines whether SG'CQIs have been received from the UE in decision step 1612. Upon receipt of the SG'CQIs ("Yes" path from decision step 1612), the Node B goes to step 1616. If the SG'CQIs have not been received ("No" path from decision step 1612), the Node B returns to step 1612.

The Node B allocates subgroups to transmit antennas based on the SG'CQIs in step 1616 and transmits data to the UE on the subcarriers of the allocated subgroups via the allocated transmit antennas in step 1618. In decision step 1620, the Node B determines whether a G'CQI period has expired. If the G'CQI period has not expired ("No" path from decision step 1620), the Node B awaits reception of SG'CQIs in the next SG'CQI period in step 1622. If the G'CQI period has expired ("Yes" path from decision step 1620), the Node B returns to step 1622.

In another embodiment of the present invention, Node B determines whether CQIs in a subframe are for subcarrier groups or the subgroups of a subcarrier group by checking an included indicator, without the need for determining mode 2.

As described above, the present invention groups into a plurality of subcarrier groups and further into a plurality of subgroups in an OFDM system, thereby achieving multiple antenna select diversity. Also, uplink transmission of feedback information on a subcarrier group basis leads to efficient use of radio resources.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method of transmitting channel quality indicators (CQIs) of a plurality of subcarriers in an orthogonal frequency division multiplexing (OFDM) system where data is transmitted on the plurality of subcarriers via one or more transmit antennas, comprising:

   grouping the subcarriers into subcarrier groups each having at least one subcarrier;
   generating CQIs for one or more allocated subcarrier groups and the transmit antennas; and
   transmitting the CQIs in one or more physical channel frames.

2. The method of claim 1, wherein the CQI transmitting step comprises:

   transmitting the CQIs in a predetermined area of one or more subframes divided from each of the physical channel frames.

3. The method of claim 2, wherein each of the subframes includes a hybrid automatic retransmission request (HARQ) acknowledgement/negative acknowledgement (ACK/NACK) area and the predetermined area for the CQIs.

4. The method of claim 1, wherein each of the CQIs is the average of the signal to interference power ratios (SIRs) or channel to noise ratios (CNRs) of signals on subcarriers of a subcarrier group.

5. A method of transmitting channel quality indicators (CQIs) of a plurality of subcarriers in an orthogonal frequency division multiplexing (OFDM) system where data is transmitted on the plurality of subcarriers via one or more transmit antennas, comprising:

grouping the subcarriers into subcarrier groups each having at least one subcarrier, and dividing each of the subcarrier groups into subgroups each having one or more subcarriers;
generating group CQIs for one or more allocated subcarrier groups and the transmit antennas;
transmitting the group CQIs in one or more physical channel frames;
generating subgroup CQIs for the allocated subcarrier groups, subgroups of the allocated subcarrier groups, and the transmit antennas; and
transmitting the subgroup CQIs in one or more physical channel frames.

6. The method of claim 5, wherein the group CQI transmitting step and the subgroup CQI transmitting step comprises:

transmitting the CQIs in a predetermined area of one or more subframes divided from each of the physical channel frames.

7. The method of claim 6, wherein the subgroup CQI transmitting step comprises:

transmitting the subgroup CQIs in a subframe without the group CQIs.

8. The method of claim 6, wherein each of the subframes includes a hybrid automatic retransmission request (HARQ) acknowledgement/negative acknowledgement (ACK/NACK) area and the predetermined area for the group CQIs or the subgroup CQIs.

9. The method of claim 8, wherein each of the subframes further includes an indicator of one or more bits indicating whether the predetermined area has a group CQI or a subgroup CQI.

10. The method of claim 9, wherein each of the subframes further includes a group indicator indicating a subcarrier group corresponding to the subgroup CQI included in the predetermined area.

11. The method of claim 5, wherein each of the group CQIs is the average of the signal to interference power ratios (SIRs) or channel to noise ratios (CNRs) of signals on subcarriers of a subcarrier group.

12. The method of claim 5, wherein each of the subgroup CQIs is the average of the signal to interference power ratios (SIRs) or channel to noise ratios (CNRs) of signals on subcarriers of a subgroup.

13. A method of receiving channel quality indicators (CQIs) of a plurality of subcarriers in an orthogonal frequency division multiplexing (OFDM) system where data is transmitted on the plurality of subcarriers via one or more transmit antennas, comprising:

grouping the subcarriers into subcarrier groups wherein each has at least one subcarrier;
receiving CQIs for one or more allocated subcarrier groups and the transmit antennas in one or more physical channel frames; and
allocating the subcarrier groups to user equipments (UEs) based on the received CQIs, and transmitting user data to the UEs on subcarriers of the allocated subcarrier groups.

14. The method of claim 13, wherein the CQI receiving step comprises:

receiving the CQIs in a predetermined area of one or more subframes divided from each of the physical channel frames.

15. The method of claim 14, wherein each of the subframes includes a hybrid automatic retransmission request (HARQ) acknowledgement/negative acknowledgement (ACK/NACK) area and the predetermined area for the CQIs.

**16.** The method of claim 13, wherein each of the CQIs is the average of the signal to interference power ratios (SIRs) or channel to noise ratios (CNRs) of signals on subcarriers of a subcarrier group.

**17.** A method of receiving channel quality indicators (CQIs) of a plurality of subcarriers in an orthogonal frequency division multiplexing (OFDM) system where data is transmitted on the plurality of subcarriers via one or more transmit antennas, comprising:

grouping the subcarriers into subcarrier groups wherein each has at least one subcarrier, and dividing each of the subcarrier groups into subgroups each having one ore more subcarriers;
receiving group CQIs for one or more allocated subcarrier groups and the transmit antennas in one or more physical channel frames;
receiving subgroup CQIs for the allocated subcarrier groups, subgroups of the allocated subcarrier groups, and the transmit antennas in one or more physical channel frames; and
allocating subcarriers to user equipments (UEs) based on the group CQIs or subgroup CQIs and transmitting user data to the UEs on the allocated subcarriers.

**18.** The method of claim 17, wherein the group CQI receiving step and the subgroup CQI receiving step comprises:

receiving the CQIs in a predetermined area of one or more subframes divided from each of the physical channel frames.

**19.** The method of claim 18, wherein the subgroup CQI receiving step comprises:

receiving the subgroup CQIs in a subframe without the group CQIs.

**20.** The method of claim 18, wherein each of the subframes includes a hybrid automatic retransmission request (HARQ) acknowledgement/negative acknowledgement (ACK/NACK) area and the predetermined area for the group CQIs or the subgroup CQIs.

**21.** The method of claim 20, wherein each of the subframes further includes an indicator of one or more bits indicating whether the predetermined area has a group CQI or a subgroup CQI.

**22.** The method of claim 21, wherein each of the subframes further includes a group indicator indicating a subcarrier group corresponding to the subgroup CQI included in the predetermined area.

**23.** The method of claim 17, wherein each of the group CQIs is the average of the signal to interference power ratios (SIRs) or channel to noise ratios (CNRs) of signals on subcarriers of a subcarrier group.

**24.** The method of claim 17, wherein each of the subgroup CQIs is the average of the signal to interference power ratios (SIRs) or channel to noise ratios (CNRs) of signals on subcarriers of a subgroup.

**25.** An apparatus for transmitting channel quality indicators (CQIs) of a plurality of subcarriers in an orthogonal frequency division multiplexing (OFDM) system where data is transmitted on the plurality of subcarriers via one or more transmit antennas, comprising:

means for grouping the subcarriers into subcarrier groups each having at least one subcarrier;
means for generating CQIs for one or more allocated subcarrier groups and the transmit antennas; and
means for transmitting the CQIs in one or more physical channel frames.

**26.** The apparatus of claim 25, wherein the means for transmitting the CQI comprises:

means for transmitting the CQIs in a predetermined area of one or more subframes divided from each of the physical channel frames.

**27.** The apparatus of claim 26, wherein each of the subframes includes a hybrid automatic retransmission request (HARQ) acknowledgement/negative acknowledgement (ACK/NACK) area and the predetermined area for the CQIs.

**28.** The apparatus of claim 25, wherein each of the CQIs is the average of the signal to interference power ratios (SIRs) or channel to noise ratios (CNRs) of signals on subcarriers of a subcarrier group.

**29.** An apparatus for transmitting channel quality indicators (CQIs) of a plurality of subcarriers in an orthogonal frequency division multiplexing (OFDM) system where data is transmitted on the plurality of subcarriers via one or more transmit antennas, comprising:

means for grouping the subcarriers into subcarrier groups each having at least one subcarrier, and dividing each of the subcarrier groups into subgroups each having one or more subcarriers;
means for generating group CQIs for one or more allocated subcarrier groups and the transmit antennas;
means for transmitting the group CQIs in one or more physical channel frames;
means for generating subgroup CQIs for the allocated subcarrier groups, subgroups of the allocated subcarrier groups, and the transmit antennas; and
means for transmitting the subgroup CQIs in one or more physical channel frames.

**30.** The apparatus of claim 29, wherein the means for transmitting the group CQI and the means for transmitting the subgroup CQI comprises:

means for transmitting the CQIs in a predetermined area of one or more subframes divided from each of the physical channel frames.

**31.** The apparatus of claim 30, wherein the means for transmitting the subgroup CQI comprises:

means for transmitting the subgroup CQIs in a subframe without the group CQIs.

**32.** The apparatus of claim 30, wherein each of the subframes includes a hybrid automatic retransmission request (HARQ) acknowledgement/negative acknowledgement (ACK/NACK) area and the predetermined area for the group CQIs or the subgroup CQIs.

**33.** The apparatus of claim 32, wherein each of the subframes further includes an indicator of one or more bits indicating whether the predetermined area has a group CQI or a subgroup CQI.

**34.** The apparatus of claim 33, wherein each of the subframes further includes a group indicator indicating a subcarrier group corresponding to the subgroup CQI included in the predetermined area.

**35.** The apparatus of claim 29, wherein each of the group CQIs is the average of the signal to interference power ratios (SIRs) or channel to noise ratios (CNRs) of signals on subcarriers of a subcarrier group.

**36.** The apparatus of claim 29, wherein each of the subgroup CQIs is the average of the signal to interference power ratios (SIRs) or channel to noise ratios (CNRs) of signals on subcarriers of a subgroup.

**37.** An apparatus for receiving channel quality indicators (CQIs) of a plurality of subcarriers in an orthogonal frequency division multiplexing (OFDM) system where data is transmitted on the plurality of subcarriers via one or more transmit antennas, comprising:

means for grouping the subcarriers into subcarrier groups wherein each has at least one subcarrier;
means for receiving CQIs for one or more allocated subcarrier groups and the transmit antennas in one or more physical channel frames; and
means for allocating the subcarrier groups to user equipments (UEs) based on the received CQIs, and transmitting user data to the UEs on subcarriers of the allocated subcarrier groups.

**38.** The apparatus of claim 37, wherein the means for receiving the CQI comprises:

means for receiving the CQIs in a predetermined area of one or more subframes divided from each of the physical channel frames.

**39.** The method of claim 38, wherein each of the subframes includes a hybrid automatic retransmission request (HARQ) acknowledgement/negative acknowledgement (ACK/NACK) area and the predetermined area for the CQIs.

40. The method of claim 37, wherein each of the CQIs is the average of the signal to interference power ratios (SIRs) or channel to noise ratios (CNRs) of signals on subcarriers of a subcarrier group.

41. An apparatus for receiving channel quality indicators (CQIs) of a plurality of subcarriers in an orthogonal frequency division multiplexing (OFDM) system where data is transmitted on the plurality of subcarriers via one or more transmit antennas, comprising:

    means for grouping the subcarriers into subcarrier groups wherein each has at least one subcarrier, and dividing each of the subcarrier groups into subgroups each having one ore more subcarriers;
    means for receiving group CQIs for one or more allocated subcarrier groups and the transmit antennas in one or more physical channel frames;
    means for receiving subgroup CQIs for the allocated subcarrier groups, subgroups of the allocated subcarrier groups, and the transmit antennas in one or more physical channel frames; and
    means for allocating subcarriers to user equipments (UEs) based on the group CQIs or subgroup CQIs and transmitting user data to the UEs on the allocated subcarriers.

42. The apparatus of claim 41, wherein the means for receiving the group CQI and the means for receiving the subgroup CQI comprises:

    means for receiving the CQIs in a predetermined area of one or more subframes divided from each of the physical channel frames.

43. The apparatus of claim 42, wherein the means for receiving the subgroup CQI comprises:

    means for receiving the subgroup CQIs in a subframe without the group CQIs.

44. The apparatus of claim 42, wherein each of the subframes includes a hybrid automatic retransmission request (HARQ) acknowledgement/negative acknowledgement (ACK/NACK) area and the predetermined area for the group CQIs or the subgroup CQIs.

45. The apparatus of claim 44, wherein each of the subframes further includes an indicator of one or more bits indicating whether the predetermined area has a group CQI or a subgroup CQI.

46. The apparatus of claim 45, wherein each of the subframes further includes a group indicator indicating a subcarrier group corresponding to the subgroup CQI included in the predetermined area.

47. The apparatus of claim 41, wherein each of the group CQIs is the average of the signal to interference power ratios (SIRs) or channel to noise ratios (CNRs) of signals on subcarriers of a subcarrier group.

48. The apparatus of claim 41, wherein each of the subgroup CQIs is the average of the signal to interference power ratios (SIRs) or channel to noise ratios (CNRs) of signals on subcarriers of a subgroup.

FIG.1

FIG.2

EP 1 533 966 A2

FIG.3

400 402 404

CHANNEL ESTIMATOR

$f_{(0)}$

$f_{(1)}$

$f_{(L-1)}$

AVERAGE CALCULATOR

CHANNEL INFORMATION GENERATOR

FIG.4

START

GROUP SUBCARRIERS — 500

ALLOCATE DATA TO SUBCARRIER GROUPS — 502

TRANSMIT DATA — 504

RECEIVE FEEDBACK INFORMATION — 506

SELECT SUBCARRIER GROUP — 508

TRANSMIT DATA BY SELECTED SUBCARRIER GROUP — 510

END

FIG.5

START

GROUP SUBCARRIERS ~600

MEASURE CHANNEL STATUS ~602

MEASURE CHANNEL STATUS
BY SUBCARRIER GROUPS ~604

GENERATE FEEDBACK INFORMATION ~606

TRANSMIT FEEDBACK INFORMATION ~608

END

# FIG.6

FIG.7

EP 1 533 966 A2

| HARQ (ACK/NACK) | CQI(k,m,g) | CQI(k,m,g+1) | ... | CQI(k,m,g+F−1) |
| --- | --- | --- | --- | --- |

Tslot = 2560 chips | 2 Tslot = 5120 chips

| HARQ−ACK | CQI |
| --- | --- |

One HS−DPCCH Subframe (2ms)

| Subframe #1 | text | Subframe #i | text | Subframe 4 |
| --- | --- | --- | --- | --- |

One radio frame Tf = 10ms

## FIG.8

EP 1 533 966 A2

EP 1 533 966 A2

| | 20 bits | | | | |
|---|---|---|---|---|---|
| HARQ | CQI for Ant1, Group 1 | CQI for Ant1, Group 2 | CQI for Ant1, Group 3 | ..... | CQI for Ant1, Group G |

⋮                     ⋮

| HARQ | CQI for Ant2, Group 1 | CQI for Ant2, Group 2 | CQI for Ant2, Group 3 | ..... | CQI for Ant2, Group G |

FIG.9

subgroup (z=1,2,...,Z)

FIG.10

FIG.11

EP 1 533 966 A2

20 bits

| HARQ | CQI for Ant1, subgroup 1 | CQI for Ant1, subgroup 2 | ..... | CQI for Ant1, subgroup Z | Indicator (bit repetition) |
|---|---|---|---|---|---|

| HARQ | CQI for Ant2, subgroup 1 | CQI for Ant2, subgroup 2 | ..... | CQI for Ant2, subgroup Z | Indicator (bit repetition) |
|---|---|---|---|---|---|

FIG.12

FIG.13

GROUP CQI

SUBGROUP CQI

FIG.14

EP 1 533 966 A2

START

1500
IN OFDM SERVICE?

NO

YES

1504
END

ESTIMATE OFDM PILOT — 1502

TRANSMISSION G'CQI — 1506

1508
IN OFDM SERVICE?

NO

YES

WATING NEXT G' PERIOD — 1514

1510
MODE 2?

NO

YES

ESTIMATE OFDM PILOT — 1512

TRANSMISSION SG'CQI — 1516

1518
G'CQI REPORTING PERIOD?

YES

NO

WAITING NEXT SG' PERIOD — 1520

FIG.15

33

FIG.16